# EUROPEAN PATENT SPECIFICATION

(11) **EP 2 240 711 B1**
(45) Date of publication and mention of the grant of the patent: **20.04.2016**
(21) Application number: 08869990.5
(22) Date of filing: 22.12.2008
(51) Int. Cl.: F16J 9/26, C23C 4/12

(54) **LATERAL SIDE PROTECTION OF A PISTON RING WITH A THERMALLY SPRAYED COATING**
SEITLICHER SCHUTZ EINES KOLBENRINGS MIT THERMISCH GESPRITZTER BESCHICHTUNG
PROTECTION DE LA FACE LATÉRALE D'UN SEGMENT DE PISTON PAR UN REVÊTEMENT PROJETÉ THERMIQUEMENT

(30) Priority: 15.12.2008 US 335000; 08.01.2008 US 19731
(43) Date of publication of application: 20.10.2010
(73) Proprietor: Mahle International GmbH, 70376 Stuttgart (DE)
(72) Inventor: SMITH, Thomas, Muskegon MI 49441 (US); STONG, Thomas, Kent City MI 49330 (US); EINBERGER, Peter, J., Muskegon MI 49445 (US); DOMANCHUK, David, Grand Haven MI 49417 (US)
(74) Representative: BRP Renaud & Partner mbB Rechtsanwälte Patentanwälte Steuerberater
(86) International application number: PCT/US2008/087989
(87) International publication number: WO 2009/088741

(56) References cited:
- EP-A- 0 489 328
- EP-A- 1 460 318
- WO-A-03/072845
- GB-A- 1 132 351

## Description

### TECHNICAL FIELD

The present disclosure relates to a piston ring for an internal combustion engine, and lubrication systems for pistons.

### BACKGROUND

A power cylinder assembly of an internal combustion engine generally comprises a reciprocating piston disposed within a cylindrical cavity of an engine block. One end of the cylindrical cavity is closed while another end of the cylindrical cavity is open. The closed end of the cylindrical cavity and an upper portion or crown of the piston defmes a combustion chamber. The open end of the cylindrical cavity permits oscillatory movement of a connecting rod, which joins a lower portion of the piston to a crankshaft, which is partially submerged in an oil sump. The crankshaft converts linear motion of the piston (resulting from combustion of fuel in the combustion chamber) into rotational motion.

The power cylinder assembly typically includes one or more piston rings (see GB-A.1 132 351) and a cylindrical sleeve or cylinder liner, which is disposed within the engine block and forms the side walls of the cylindrical cavity. The piston rings are disposed in grooves formed in the lateral walls of the piston, and extend outwardly from the piston into an annular space delineated by the piston wall and the cylinder liner. During movement of the piston within the cylindrical cavity, the piston rings bear against the cylinder liner. The piston rings have two main functions. First, they inhibit gas flow from the combustion chamber into the oil sump through the annular space between the piston and the cylinder liner. Second, they minimize oil flow from the oil sump into the combustion chamber.

Piston rings generally must survive extreme temperatures and pressures resulting from the combustion cycle. Accordingly, the outer surface of a piston ring that bears upon the cylinder liner or bore surface is often sprayed with a hard surface coating, or otherwise treated to create a hardened outer surface that is more durable than an untreated surface. Coatings applied via spraying are inherently difficult to apply accurately, and the piston rings must be masked in some form to prevent sprayed coatings from adhering to surfaces other than the intended outer piston ring surface. Fortunately, a piston ring outer surface can generally be masked simply by stacking multiple piston rings upon one another and applying a treatment simultaneously to the stacked rings, thereby generally preventing overspray from reaching other piston ring surfaces.

Recent increases in fuel economy and emission requirements for engines have made surface treatments more desirable for surfaces other than the outermost piston ring surface. However, similar difficulties in masking the desired areas for treatment are inherent, and other piston ring surfaces cannot be masked using the same stacking approach as for outer piston ring surface treatments.

Accordingly, there is a need for a piston ring that provides increased durability for surfaces other than the outer piston ring surface, and is cost-effective for production in a mass manufacturing environment.

### BRIEF DESCRIPTION OF THE DRAWINGS

While the claims are not limited to the illustrated embodiments, an appreciation of various aspects is best gained through a discussion of various examples thereof. Referring now to the drawings, illustrative embodiments are shown in detail. Although the drawings represent the embodiments, the drawings are not necessarily to scale and certain features may be exaggerated to better illustrate and explain an innovative aspect of an embodiment. Further, the embodiments described herein are not intended to be exhaustive or otherwise limiting or restricting to the precise form and configuration shown in the drawings and disclosed in the following detailed description. Exemplary embodiments of the present invention are described in detail by referring to the drawings as follows.
FIG. 1 illustrates a cross-section of an exemplary piston ring received within a piston ring groove.
FIG. 2A illustrates an elevated perspective view of an exemplary fixture for applying a spray coating to a piston ring.
FIG. 2B illustrates a cross-sectional view of the exemplary fixture shown in FIG. 2A.
FIG. 2C illustrates a close-up view of a portion of FIG. 2B.
FIG. 2D illustrates a close-up view of a portion of FIG. 2A, illustrating the exemplary fixture of FIG. 2A.
FIG. 2E illustrates the close-up view of FIG. 2D, with an exemplary piston ring positioned in the fixture.
FIG. 3A illustrates another exemplary fixture for applying a coating to a piston ring.
FIG. 3B illustrates yet another exemplary fixture for applying a coating to a piston ring.
FIG. 4 illustrates an exemplary process flow diagram for applying a coating to a piston ring.

### DETAILED DESCRIPTION

While the claims are not limited to the illustrated examples, an appreciation of various aspects is best gained through a discussion of various examples thereof. Referring now to the discussion that follows and also to the drawings, illustrative approaches to the disclosed systems and methods are shown in detail. Although the drawings represent some possible approaches, the drawings are not necessarily to scale and certain features may be exaggerated, removed, or partially sectioned to better illustrate and explain an innovative aspect of an example. Further, the descriptions set forth herein are not intended to be exhaustive or otherwise limit or restrict the claims to the precise forms and configurations shown in the drawings and disclosed in the following detailed description.

Moreover, there are a number of constants or variables introduced in the discussion that follows. In some cases illustrative values of the constants are provided. In other cases, no specific values are given. The values of the constants will depend on characteristics of the associated hardware and the interrelationship of such characteristics with one another as well as environmental conditions and the operational conditions associated with the disclosed system.

According to various exemplary illustrations, a piston ring may include a radially extending upper surface, a radially extending lower surface, a radially innermost surface extending between the upper surface and the lower surface; and a radially outermost surface extending between the upper surface and the lower surface. The lower surface includes a thermally sprayed coating, and both the radially outermost surface and the upper surface lack the coating. Accordingly, the thermally sprayed coating may generally be applied solely to the lower radially extending surface of the ring.

Additionally, a fixture for applying a coating to a piston ring is disclosed. The fixture may include a member defining an upper surface and a counter bore. The counter bore has an outer periphery and an inner periphery, the outer periphery extending downward from the upper surface. The counter bore receives a piston ring including a lower surface. The fixture further includes a spray torch configured to direct a thermal spray from the outer periphery toward the inner periphery, the spray impinging upon the lower surface of said piston ring. The outer periphery extends above the piston ring such that the thermal spray is at least partially blocked by the upper surface, thereby forming a coating layer on said lower surface that terminates radially inwardly of the radially outermost surface of the piston ring, thereby forming an uncoated zone or gap between the thermally sprayed coating and the radially outermost surface. A portion of the lower surface is thus uncoated adjacent to the radially outermost surface, with the portion extending to said radially outermost surface.

Further, an exemplary method of applying a coating to a piston ring is disclosed that includes inserting a piston ring into a fixture assembly. The fixture assembly includes an upper surface and a counter-bore receiving the piston ring. The method further includes spraying a coating toward the piston ring from an outer diameter of the piston ring toward an inner diameter of the ring, applying the spray to an exposed surface of the piston ring to form the coating, and selectively contacting the upper surface with a portion of the spray. The exemplary method further includes forming an uncoated zone or gap on the lower surface between a terminating end of the coating and an outermost diameter of the piston ring. The uncoated zone is left uncoated by the coating, and extends to the radially outermost surface of the piston ring. The upper surface facilitates formation of the uncoated zone by preventing the portion of the spray from contacting the piston ring.

Generally, a wear environment between the lateral surfaces of the piston ring, e.g., the lower radially extending surface, and the receiving ring groove is different as compared with that typical of the generally vertical, radially outermost surface of the ring and the mating cast iron surface of a cylinder liner. For example, material properties of a machined steel piston ring groove engaging a machined piston ring provide one difference. A second difference relates to the reciprocal vertical movement of the piston ring with respect to the groove surface as the piston moves up and down. Moreover, the ring flexes radially inwardly and radially outwardly, rubbing against the piston ring groove surface during piston operation.

A thermal spraying process generally involves spraying melted or heated materials onto a surface. A thermally sprayed coating generally provides a positive wear resistant surface while minimizing drawbacks associated with other coatings. For example, a coating layer thickness can be significantly greater for thermally sprayed coatings than for traditional wear coatings, which typically range from 5-20 microns. Further, base materials employed in thermally sprayed coatings can be less expensive. Additionally, fatigue characteristics are not impacted negatively by a thermally sprayed coating. Moreover, there are fewer potential environmental issues associated with a thermal spraying process than for traditional wear coatings.

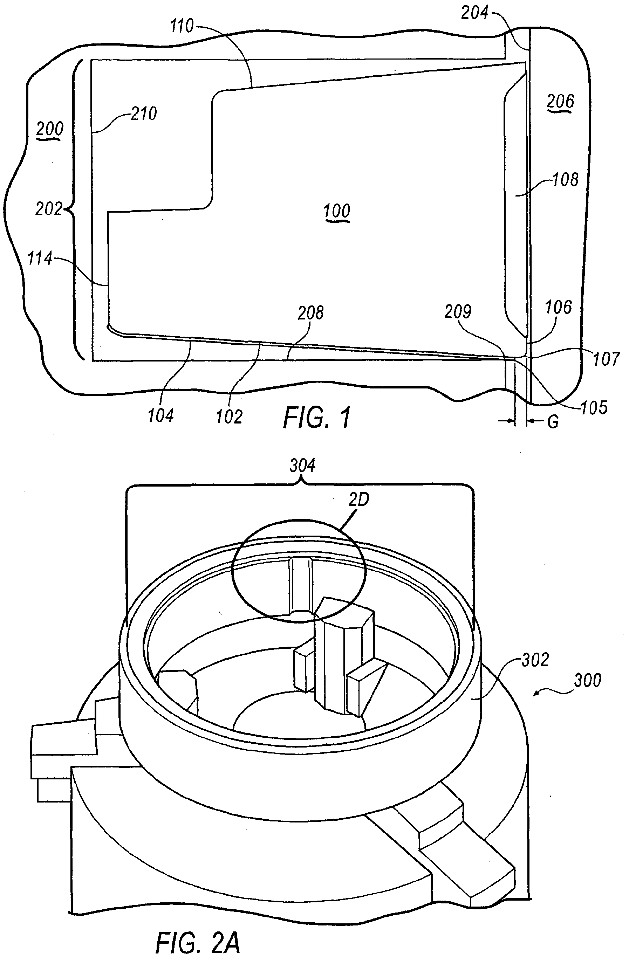

Turning now to FIG. 1, a cross section of a split piston ring 100 is received within a piston groove 202 defined by a piston 200. The piston 200 is received within an engine block 206 defining an inner bore surface or cylinder liner surface 204. A lower surface 102 of the piston ring 100 includes a coating layer 104, e.g., a plasma sprayed coating, thermally sprayed coating. A radially outermost surface 106 of the ring may include a separate wear coating 108, while an upper surface 110 of the ring and a radially innermost surface 112 each lack a coating. The thermally sprayed coating 104 terminates short of the radially outermost surface 106 of the piston ring 100, thereby defining an gap, gap zone, or uncoated zone G between a radially outmost edge 105 of the coating layer 104 and the radially outermost surface 106. In contrast, however, the coating 104 may extend in a radially inward direction to a radially innermost surface 114 of the piston ring 100, and in some cases may extend slightly upward along the radially innermost surface 114 adjacent the lower surface 102.

An uncoated zone G between the radially outermost edge 105 of the coating and the radially outermost surface 106 of the piston ring 100 is possible without affecting the performance of the piston ring coating in combination with its mating surface of the piston groove since the piston ring 100 extends outwardly from the receiving piston groove 202. As shown in FIG. 1, the radially outermost edge 105 of the coating 104 cannot contact the bore surface 204 during operation of the piston 200, as the uncoated zone G will result in the coating 104 being spaced away from the bore surface 204 at all times. The radially outermost surface 106 of the piston ring 100 will slide or scrape along the bore surface 204 during reciprocal motion of the piston 200, while the radially outermost edge 105 of the coating 104 will necessarily be spaced away from the bore surface 204 by the uncoated zone G.

A radially outermost lower circumferential edge 107 of the piston ring is not covered with the coating layer 104. This advantageously provides a consistent interface between the piston ring 100 and the bore surface 204, and improves an ability of the piston ring 100 to scrape oil from surfaces of the engine, e.g., the bore surface 204, during engine operation, as compared with a piston ring where the coating layer extends all the way to the outermost surface 106 and/or the radially outermost circumferential edge 107. In other words, by providing a radially outermost lower circumferential edge 107 that is not coated with the thermally sprayed coating layer 104, the piston ring 100 is more effective at scraping oil from the bore surface 204, and preventing escape of the oil into the combustion chamber of the engine.

The radially outermost lower circumferential edge 107 may define a relatively sharp transition between the lower surface 102 and the radially outermost surface 106. For example, as best seen in FIG. 1, the lower surface 102 and the radially outermost surface 106 are generally normal to each other. While the radially outermost surface 106 may be generally vertical, the lower surface 102 may defined a small angle with respect to horizontal, such that the surfaces 106, 102 do not define an exact right angle, but are generally normal to each other, discounting the small angle defined by the lower surface 102 with respect to horizontal. The radially outermost lower circumferential edge 107 is thus relatively sharp to increase the effectiveness of the piston ring 100 at scraping oil from the bore surface 204, especially when the piston ring 100 moves in a downward direction with respect to the bore surface 204. The radially outermost lower circumferential edge 107 defines a transition directly from the lower surface 102 to the radially outermost surface 106, and does not include any surface undulations, e.g., a chamfer, in between the lower surface 102 and the radially outermost surface 106 that would otherwise "soften" or "round" the transition between the two surfaces 102, 106. A radius of the radially outermost circumferential edge 107 may thus generally be a minimum, and is preferably no greater than a maximum amount that is effective for scraping oil from the bore surface 204 during operation.

The coating layer 104 thus provides an interface between the piston ring 100 and a lower surface 208 of the piston groove 202. At the same time, the coating layer 104, and particularly the radially outermost edge 105, does not contact or otherwise interface with the bore surface 204. The uncoated zone G thus prevents interaction of the coating layer 104 with the bore surface 204, thereby preventing the reciprocal motion of the piston from scraping or wearing the coating layer 104, and in particular the radially outermost edge 105. As noted above, a separate wear coating 108 may be applied to the radially outermost surface 106 of the piston ring 100.

As described above, the radially outermost edge 105 preferably terminates short of the associated radial piston ring surface, e.g., the radially outermost surface 106. By contrast, the radially innermost surface 114 of the piston ring 100 is generally a non-functional surface, and may not cause any significant wear upon the radially innermost surface 114, e.g., from interaction of the innermost surface 114 with a radially inner surface 210 of the piston groove 202. Thus, if a portion of the radially innermost surface 114 receives some of the coating 104, e.g., during thermal spraying of the coating 104, it will not adversely affect piston ring 100 performance.

Generally, a thermal spray coating 104 may be applied to the lower surface 102 of the piston ring 100 using a thermal spray torch. In some cases, it may be desirable to apply a bond coating (not shown) to the lower surface 102, and then apply the coating 104. In other cases it may be desirable to apply the coating 104 directly. Generally, a thermal spray procedure results in a coating 104 that is uniformly applied, i.e., that has a generally uniform thickness. Further, such uniform thicknesses are generally possible even when applying coating 104 in a relatively thick layer, e.g., (insert range of possible thicknesses, if applicable). For example, a thermally sprayed material may have a thickness of up to 100 microns, and may be even thicker if desired. In one example, a thickness of 25-75 microns is employed for coating layer 104. A relatively thick coat of the layer 104 is often desirable, as it may be desirable to remove an exposed outer portion of the coating 104 through a grinding or smoothing operation after the application of the coating layer 104. The coating 104 thus does not inadvertently abrade its mating piston groove surface, e.g., the lower surface 208, during operation. Additionally, as the thermal spray process generally allows use of both a bond coating and a wear-resistant coating, less expensive base materials may be used. Further, thermally sprayed coatings tend to minimize potential ring fatigue issues.

A wide range of possible wear coatings may be used for coating layer 104. Representative examples of possible wear coatings include the following:
- Molybdenum Based
- Nickel Based
- Chrome Based
- Tungsten Based
- Iron Based
- Cobalt Based
- Copper Based
- Carbides (including Chrome, Tungsten, Titanium, Vanadium, etc.)
- Oxides (including Chrome, Aluminum, Titanium, etc.)
- Nitrides (including Chrome, Aluminum, Titanium, etc.)
Further, representative examples of possible bond coatings include the following:
- Molybdenum Based
- Nickel Based
- Chrome Based
- Tungsten Based
- Iron Based
- Cobalt Based
- Copper Based
Any other types of wear and bond coatings may be employed that are convenient.

Generally, to properly coat a desired portion of the lower ring surface 102, the piston ring 100 must be masked so that when sprayed, the sprayed material only contacts the desired surface(s) of the ring 100.

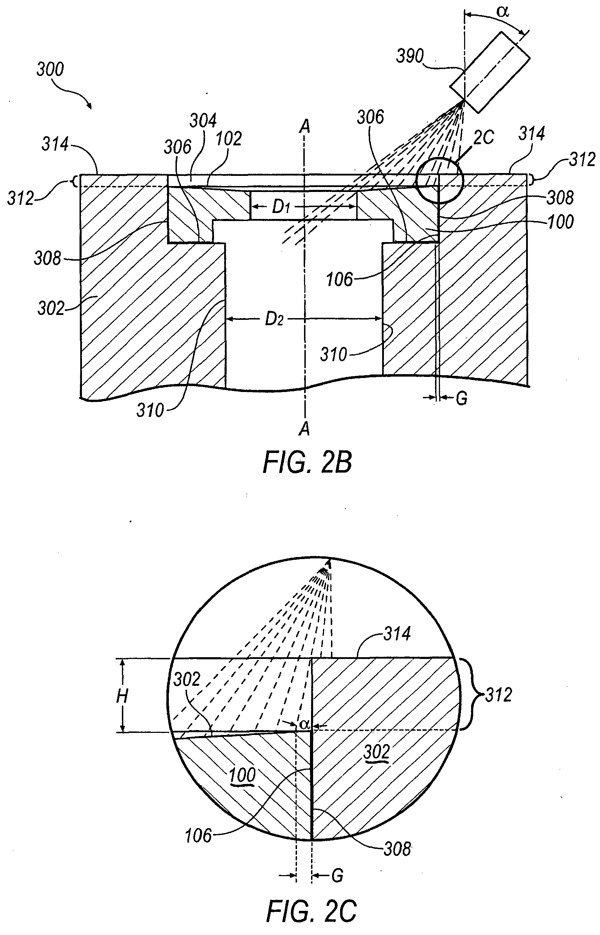

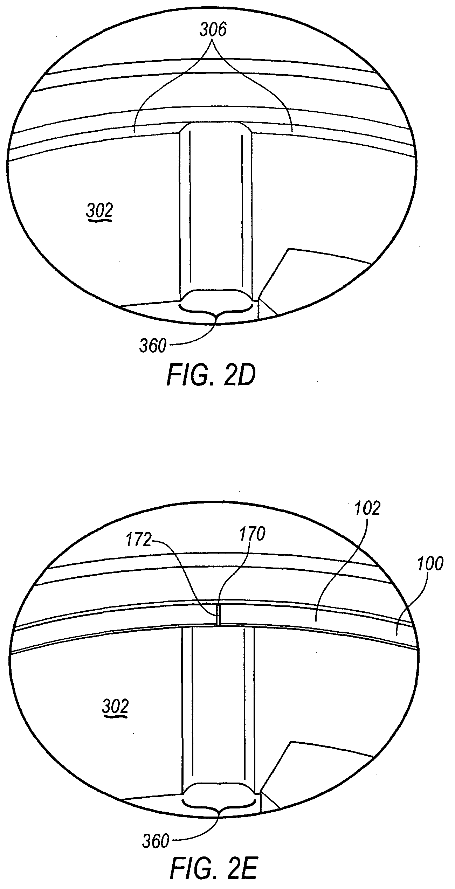

Turning now to FIGS. 2A, 2B, 2C, and 2D, a first exemplary approach to coating a piston ring 100 is shown. A fixture assembly 300 includes a first cylindrical component 302 having a counter-bore 304 that is generally L-shaped in cross section. As best seen in FIG. 2B, the counter bore 304 of the cylindrical component 302 includes a ledge 306 extending radially inwardly from a first periphery 308, and terminating at a second periphery 310 having a smaller radius than the first periphery 308. The first cylindrical component may be formed of any material that is convenient. For example, a generally metallic material may be desirable for resisting elevated temperatures inherent in a thermal spraying process.

The counter-bore 304 is dimensioned such that a piston ring, e.g., piston ring 100 as shown in FIG. 2B, may be inserted with the radially outermost surface 106 of the piston ring 100 generally contacting the first periphery 308 of the first cylindrical component 302. As shown in FIG. 2B, it may be desirable to have the radially innermost surface 114 of the piston ring 100 disposed radially inwardly with respect to the second periphery 310 of the first cylindrical component 302, such that a diameter D₁ defining the innermost surface 114 of the piston ring 100 is smaller than a diameter D₂ defining the second periphery R2 of the counter-bore 304. Thus, a portion of the piston ring 100 generally overhangs the counter-bore ledge 306, extending radially inwardly beyond the second periphery 310. The extension of the piston ring 100 radially inwardly beyond the second periphery 310 may generally prevent overspray associated with a spraying operation, e.g., a thermal spraying operation associated with piston ring 100, from contacting portions of the first cylindrical component 302 to which the overspray would otherwise undesirably adhere.

As shown in FIG. 2B, the upper or exposed surface of the piston ring 100 is the lower surface 102 discussed above with respect to Figure 1. The piston ring 100 is thus placed generally "upside down" within the counter bore 304.

As shown in FIG. 2C, the first periphery 308 of the counter-bore 304 extends a distance H vertically above the exposed lower surface 102 of the piston ring 100, thereby forming a lip portion 312. While the lip portion 312 of the first cylindrical component 302 is shown as being integral with the first cylindrical section 302, or generally formed of a single piece, lip portion 312 may alternatively be formed as a second distinct cylindrical section that is selectively removable from the first cylindrical component 302. A selectively removable lip portion 312 may be desirable for simplifying cleaning and maintenance of the fixture assembly 300. For example, thermally sprayed material may accumulate upon an upper surface 314 of the fixture 300 after repeated spraying cycles, undesirably increasing the radial extent of the uncoated zone G. Accordingly, it may be necessary to remove accumulated sprayed material from the upper surface 314. Where the lip portion 312 is selectively removable from the cylindrical component 302, the upper surface 314 may be easily removed entirely from the cylindrical component 302 for cleaning or replacement.

Generally, a coating material may be applied using the fixture 300 as the first cylindrical component 302 is spun about an axis of rotation A-A which is defined by the ring 100. For example, a motor (not shown) may drive the first cylindrical component 302 upon a spindle, such that the entire first cylindrical component 302 turns, thereby also spinning the ring 100 about its axis A-A. A spray torch 390 maintains an elevated position relative to the cylindrical component 302, and may oscillate, for example in a radial direction with respect to the ring 100, to provide a back and forth spraying motion to the piston ring 100.

Once the ring 100 is placed within the counter bore 304, the ring 100 may initially be subjected to a grit blasting procedure to promote adhesion of a coating to the ring 100. Typically, the first cylindrical component 302 is spun the axis A-A, while a blast nozzle (not shown) is moved into position above the ring and first cylindrical component and the grit shot at the ring.

Once the optional grit blasting takes place, the ring 100 and first cylindrical component 302 may be moved into a spray booth. As described above, a thermal spraying or plasma coating operation may apply either a wear-resistant coating or a combination of a bond coating and a wear-resistant coating. A same thermal spray torch, e.g., spray torch 390, may be used for both coatings if desired. The spray torch 390 is positioned above the ring and at an angle **α** with respect to a vertical direction, as best seen in FIGS. 2A and 2B. Further, the spray torch 390 is positioned such that material leaving the nozzle of the torch 390 is sprayed at an angle from the outermost diameter 106 of the ring 100 toward the inner diameter, i.e., the axis A-A of the ring 100 and the innermost surface 114 of the ring 100. The spray is thus not oriented straight down toward the ring 100 from the spray torch 390, but rather at an angle **α** with respect to vertical, and also the axis A-A of ring rotation. As discussed below, the fixture assembly performs a masking function by way of the lip portion 312 and/or upper surface 314, such that sprayed material that might otherwise hit an undesired portion of the ring (i.e., the uncoated zone G) instead contacts a non-ring component in the form of the lip portion 312. A vertical depth of the counter-bore 304 and a lateral extent of the lip 312 and/or upper surface 314 thus define a lateral extent of the "shadow" provided by the lip portion 312 and/or upper surface 314. For example, as best seen in FIG. 2C, a height H of the counterbore 304 relative to the upper surface 102 defines, at least in part, a lateral width of the uncoated zone G. The lip portion 312 thus acts as a mask, generally preventing sprayed material from contacting or adhering to the uncoated zone G of the ring 100. Generally, the thickness of layer 104 will remain constant along the radial extent of the layer 104, but may be subject to some variation depending on the application methodology of layer 104.

Over time, sprayed material may build up on the upper surface 314 of the fixture 300, and may thus need to be periodically removed from the upper surface 314 in.order to prevent the "shadow" cast by the upper surface 314 from increasing the lateral extent of the uncoated zone G. Further, as describe above, lip portion 312 may be selectively removable from the first cylindrical section 302 to simplify cleaning or replacement of the lip portion 312. Such a removable lip portion 312 may be formed form a dissimilar material and may even include a release agent of some type that generally resists buildup of the sprayed material on the upper surface 314 to begin with.

Turning now to FIGS. 2D and 2E, the counter-bore 304 of the cylindrical member 302 may include a machined interruption or groove 360. The groove 360 extends vertically down at least a portion of the cylindrical member 302, and may be positioned beneath a split in the piston ring 100. Free ends 170, 172 of the piston ring 100 are thus disposed over the groove 360 when the ring 100 is placed in the fixture 300. The groove 360 thus allows sprayed material to flow through a gap defined by a split in the piston ring 100, e.g., between the free ends 170, 172, without adhering to a surface in immediate contact with the piston ring 100, e.g., ledge 306 of the first cylindrical component 302. Groove 360 or, for that matter any groove, interruption, or depression in the ledge 306 of the cylindrical component 302 thus allows any stray coating material to drop down away from the ring 100 between the free ends 170, 172 without being fixed to a non-desired surface, e.g., the facing surfaces of the free ends 170, 172.

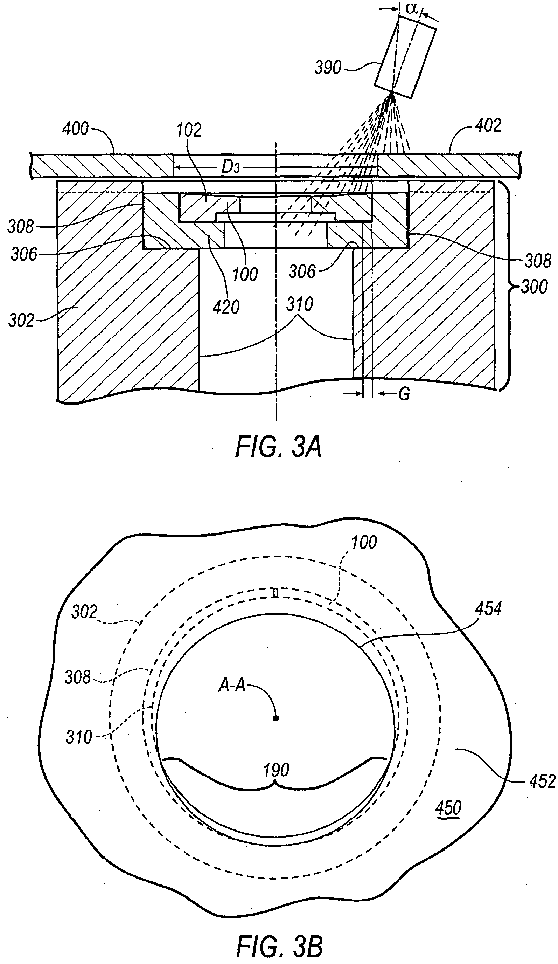

Turning now to FIGS. 3A and 3B, alternate examples of thermal spray coating fixtures are shown. With reference to FIG. 3A, one example includes a mask plate 400 that is affixed to the fixture assembly 300, in between the fixture assembly 300 and the spray torch 390. Accordingly, an upper surface 402 of the mask plate generally blocks sprayed material from spray torch 390, rather than lip portion 312. The mask plate 400 may be fixed to the first cylindrical component 302 for rotation therewith, and may even have a cylindrical shape mimicking a footprint of the first cylindrical component 302. When the first cylindrical component 302 spins about the axis of rotation A-A, the spray torch 390 sprays the coating toward the exposed lower surface 102 of the piston ring 100, as described above for fixture assembly 300. However, in contrast to the lip portion 312 blocking the sprayed material, the mask 400 generally prevents the coating material from reaching the portion of the surface 102 of the ring 100 defining the uncoated zone G described above. Similar to the selectively removable example of the lip portion 312, mask plate 400 advantageously allows for selective removal of the mask plate 400, thereby also allowing for removal of the mask plate 400 for cleaning or replacement as may be useful to prevent buildup of sprayed material upon the upper surface 402 of the mask plate 400. While the mask plate 400 is shown having a generally round aperture with a diameter D₃ through which sprayed material impinges upon the fixture 300 and/or the piston ring 100, mask plate 400 may be shaped differently, and may even be a plate simply positioned under the spray torch 390 to provide an edge or other obstruction to create the uncoated zone G in the coating material 104 of the piston ring 100. Additionally, as shown in FIG. 3A, a spacer ring 420 may be provided that receives the piston ring 100. Spacer ring 420 may allow for the use of fixture 300 with piston rings having a smaller outer diameter than the peripheral surface 308 of the fixture. By positioning the piston ring 100 within the fixture 300, the spacer ring 420 may define in part a radial extent of the uncoated zone G of the piston ring 100.

With reference to FIG. 3B, another alternative approach is illustrated using a mask plate 450 that is not fixed to the first cylindrical component 302. Rather, the mask plate 450 is positioned above the first cylindrical component 302 in a fixed position. The mask plate 450 does not rotate with the first cylindrical component 302, which turns on a spindle as described above. The mask plate 450 defines a generally circular aperture 454 that is positioned eccentrically with respect to the piston ring 100. The aperture 454 has a diameter that, as shown in FIG. 3B, is smaller than the inner diameter of the piston ring 100, i.e., a diameter between the innermost radial surfaces 114, such that sprayed material directed at an exposed portion 190 of the piston ring 100 does not reach other portions of the piston ring 100. During a thermal spraying operation, the first cylindrical component 302 may be turned, such that the entire ring 100 is gradually presented in the exposure zone 190 and the spray impinges upon the exposed portions of the ring 100. Additionally, a spray torch may be angled with respect to the longitudinal axis A-A of the ring 100, thereby creating the uncoated zone G in the coating 104 of the finished ring 100, as described above.

Other masking approaches are possible, including a smaller fixture or other types or configurations of removable masks. In each approach, however, an uncoated zone G is formed between a radially outermost edge of the sprayed coating material and a radially outermost surface of the piston ring. Thus, at least a small portion or uncoated zone G of a lower surface of the ring 100 remains uncoated.

Once the coating layer 104 is applied and the ring 100 removed from the fixture, any excess coating on the mask may be easily removed, e.g., by grinding or sanding the coating 104 down to a desired thickness or surface smoothness. If additional coating thickness is desired, the coating operation may take place more than once before the ring is removed, thereby increasing an overall thickness of the coating layer 104 on the ring 100.

A fixture assembly as described herein may be utilized in mass manufacturing environments in a variety of ways. For example, after application of a coating layer 104 to a ring 100, the ring 100 may be removed and another ring 100 may next be inserted into the fixture for application of a coating layer 104. Alternatively, a fixture assembly may include a feed mechanism wherein there are a plurality of first cylindrical sections 302, each receiving a ring 100, with spraying operations taking place at different stations, including both grit blasting and one or more coating operations (e.g., both a bond coating operation and a wear-resistant coating operation).

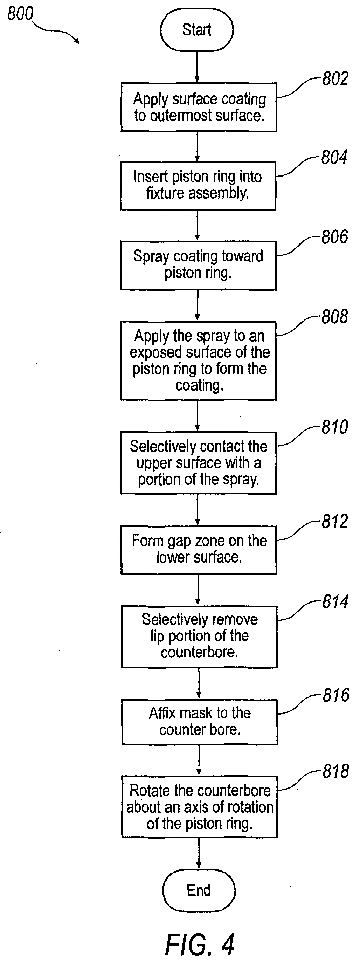

Turning now to FIG. 4, an exemplary process 800 for forming a piston ring is illustrated. Process 800 may begin at step 802, which is optional. In step 802, a surface coating may be applied to the piston ring that is distinct from a thermally sprayed coating. For example, a wear coating may be applied to the radially outermost surface 106 of the piston ring 100. Process 800 may then proceed to step 804. In an exemplary process where step 802 is not present, the process may begin at step 804.

In step 804, a piston ring is inserted into a fixture assembly. For example, as described above, a piston ring 100 may be inserted into a fixture assembly 300 that includes an upper surface 314 and a counter-bore 304 receiving the piston ring 100. Process 800 may then proceed to step 806.

In step 806, a coating is sprayed toward the piston ring from an outer diameter of the piston ring toward an inner diameter of the ring. For example, a spray torch 390 may direct a thermal spray coating toward the piston ring 100 such that the spray is directed at an angle from an outer periphery, e.g., first periphery 308, toward an inner periphery, e.g., second periphery 310, of the counter bore 304. Process 800 then proceeds to step 808.

In step 808, the spray is applied to an exposed surface of the piston ring to form a coating layer. As described above, spray torch 390 may direct a thermal spray onto the lower surface 102 of the piston ring 100, thereby forming coating layer 104. Process 800 may then proceed to step 810.

In step 810, the upper surface is selectively contacted with a portion of the spray. For example, as described above, the upper surface 314 of the fixture 300 may generally block a portion of the spray from the spray torch 390. Process 800 then proceeds to step 812.

In step 812, an uncoated zone is formed on the lower surface of the piston ring between a terminating end of the coating and an outermost diameter of the piston ring. As described above, an uncoated zone G may be formed that is generally uncoated by the coating layer 104, with the uncoated zone extending to the radially outermost surface 106 of the piston ring 100. The upper surface 314 thus facilitates formation of the uncoated zone G by preventing the portion of the spray contacting the upper surface 314 from contacting the piston ring 100. To form the uncoated zone G, the spray may be directed at an angle, e.g., angle **α**, with respect to an axis of rotation of the piston ring 100, e.g., axis A-A described above. The angle **α** generally cooperates with the upper surface 314 to define a radial extent or width of the uncoated zone G. A height H of the upper surface 314 (see FIG. 2C) may additionally define in part the radial extent or width of the uncoated zone G. Further, the spray may be applied generally about an entire circumference of the piston ring 100, and the uncoated zone may also extend about the entire circumference of the piston ring 100. Process 800 may then proceed to step 814.

In optional step 814, a lip portion of the counter bore is selectively removed. For example, as described above, the lip portion 312 may generally be a separable part of the counter bore 304, to allow removal of the lip portion 312 for cleaning and/or replacement. Further, the lip portion 312 may generally define the upper surface 314.

Proceeding to optional step 816, a mask that defines the upper surface is affixed to or above the counter bore. For example, a mask plate 400 may be affixed to the first cylindrical member 302 that defines the counter bore 304 for rotation therewith. Alternatively, a mask plate 450 may be placed in a fixed position above the first cylindrical member 302, which may rotate while a thermal spray is applied, e.g., using spray torch 390. Process 800 may then proceed to optional step 818.

In step 818, the counter bore may be rotated about an axis of rotation of the piston ring while the spray is selectively contacted by the upper surface. For example, counter bore 304 may be spun by turning the first cylindrical member 302 upon a spindle, such that the counter bore 304 turns about the axis of rotation A-A defined by the piston ring 100. Process 800 may then terminate.

Although the exemplary piston ring 100 described above has been described as being produced using fixture 300 and a spraying process involving masking or selectively blocking at least a portion of the spray to create the uncoated zone G, other methods of producing a piston ring 100 with an uncoated zone G may be utilized. Merely as an example, an uncoated zone area, e.g., uncoated zone G, may initially be coated with a thermally sprayed material that is subsequently removed, such as by grinding, sanding, or the like, to create the uncoated uncoated zone G.

Reference in the specification to "one example," "an example," "one embodiment," or "an embodiment" means that a particular feature, structure, or characteristic described in connection with the example is included in at least one example. The phrase "in one example" in various places in the specification does not necessarily refer to the same example each time it appears.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive. Many embodiments and applications other than the examples provided would be apparent to those of skill in the art upon reading the above description. The scope of the invention should be determined, not with reference to the above description, but should instead be determined with reference to the appended claims, along with the full scope of equivalents to which such claims are entitled. It is anticipated and intended that future developments will occur in the arts discussed herein, and that the disclosed systems and methods will be incorporated into such future embodiments. In sum, it should be understood that the invention is capable of modification and variation and is limited only by the following claims.

All terms used in the claims are intended to be given their broadest reasonable constructions and their ordinary meanings as understood by those skilled in the art unless an explicit indication to the contrary in made herein. In particular, use of the singular articles such as "a," "the," "said," etc. should be read to recite one or more of the indicated elements unless a claim recites an explicit limitation to the contrary.

## Claims

1. A piston ring (100), comprising:
a radially extending upper surface (110);
a radially extending lower surface (102);
a radially innermost surface (112) extending between said upper surface (110) and said lower surface (102);
a radially outermost surface (106) extending between said upper surface (110) and said lower surface (102);
**characterised in that** said lower surface (102) includes a thermally sprayed coating (104), and both said radially outermost surface (106) and said upper surface (102) lacks said coating,
wherein said thermally sprayed coating (104) terminates radially inwardly of said radially outermost surface (106), thereby forming an uncoated zone (G) between said thermally sprayed coating (104) and said radially outermost surface (106) such that a portion of said lower surface (102) is uncoated adjacent to said radially outermost surface (106), said portion extending to said radially outermost surface (106).

2. The piston ring of claim 1, wherein said outermost surface (106) selectively includes a surface coating distinct from said thermally sprayed coating (104) associated with said lower surface (102).

3. The piston ring of claim 1, further comprising a radially outermost lower circumferential edge (107) configured to scrape oil from an associated engine bore surface (204), said radially outermost lower circumferential edge (107) being disposed in said uncoated zone (G).

4. The piston ring of claim 1, wherein a portion of said thermally sprayed coating (104) selectively extends slightly upwardly along a portion of said innermost surface (112) adjacent said lower surface (102).

5. The piston ring of claim 1, wherein said piston ring (100) is a split piston ring defining two adjacent free ends (170, 172).

6. A method, comprising:
inserting a piston ring (100) into a fixture assembly (300), said fixture assembly (300) including an upper surface (314, 402, 452) and a counter-bore (304) receiving said piston ring (100);
spraying a coating (104) toward said piston ring (100), said coating (104) directed from an outer diameter of said piston ring (100) toward an inner diameter of said ring (100);
applying the spray to an exposed surface of said piston ring (100) to form said coating (104);
selectively contacting said upper surface (314, 402, 452) with a portion of the spray;
wherein spraying said coating (104) includes directing the spray at an angle (α) with respect to an axis of rotation of said piston ring (100);
wherein said angle (α) of the spray cooperates with said upper surface (314, 402, 450) to define a radial extent of said uncoated zone (G) on said piston ring (100); and
thereby forming an uncoated zone (G) on said lower surface (102) between a terminating end of said coating (104) and an outermost diameter (106) of said piston ring (100), said uncoated zone (G) extending to the radially outermost surface (106).

7. The method of claim 6, further comprising selectively removing a lip portion (312) of said counter bore (304), said lip portion (312) defining said upper surface (314).

8. The method of claim 6, further comprising applying a surface coating distinct from said thermally sprayed coating (104) to said outermost surface (106).

9. The method of claim 6, further comprising affixing a mask (400, 450) to said counter bore (304), said mask defining said upper surface (402, 452).

10. The method of claim 6, further comprising rotating said counter bore (304) about an axis of rotation of said piston ring (100) during said selectively contacting said upper surface (312, 402, 452) with the spray.

11. The method of claim 6, establishing said uncoated zone (G) as extending about an entire circumference of said piston ring (100).

12. A piston ring assembly fixture (300), comprising:
a member (312, 400, 450) defining an upper surface (314, 402, 452) and a counter bore (304), said counter bore (304) having an outer periphery (308) and an inner periphery (310), said outer periphery (308) extending downward from said upper surface (314, 402, 452);
a piston ring (100) received within said counter bore (304), said piston ring (100) including:
a radially extending upper surface (110);
a radially extending lower surface (102);
a radially innermost surface (112) extending between said upper surface (110) and said lower surface (102);
a radially outermost surface (106) extending between said upper surface (110) and said lower surface (102); and
a spray torch (390) configured to direct a thermal spray from said outer periphery toward said inner periphery, the spray impinging upon said lower surface (102) of said piston ring (100), said outer periphery extending above said piston ring such that the thermal spray is at least partially blocked by said upper surface (314, 402, 452), thereby forming a coating layer (104) on said lower surface (102) that terminates radially inwardly of said radially outermost surface (106) of said piston ring (100), thereby forming an uncoated zone (G) between said thermally sprayed coating (104) and said radially outermost surface (106) such that a portion of said lower surface (102) is uncoated adjacent to said radially outermost surface (106), said portion extending to said radially outermost surface (106).

13. The fixture of claim 12, wherein said counter bore (304) includes a lip portion (312), said lip portion (312) defining said upper surface (314) such that the thermal spray is at least partially blocked by said lip portion (312), said lip portion (312) being selectively removable from said counter bore (304).

14. The fixture of claim 13, wherein said lip portion (312) includes a release agent configured to facilitate removal of said thermally sprayed coating from said lip portion (312).

15. The fixture of claim 12, wherein said member (312, 400, 450) is selectively rotatable about an axis of rotation of said piston ring (100).

16. The fixture of claim 12, wherein said spray torch (390) is configured to direct the thermal spray at an angle (α) from said outer periphery toward said inner periphery, said angle (α) cooperating with said upper surface (314, 402, 452) to define a radial extent of said uncoated zone (G).

## Patentansprüche

1. Kolbenring (100), umfassend:
eine sich radial erstreckende obere Fläche (110);
eine sich radial erstreckende untere Fläche (102);
eine radial innerste Fläche (112), die sich zwischen der oberen Fläche (110) und der unteren Fläche (102) erstreckt;
eine radial äußerste Fläche (106), die sich zwischen der oberen Fläche (110) und der unteren Fläche (102) erstreckt;
**dadurch gekennzeichnet, dass**
die untere Fläche (102) eine thermisch gespritzte Beschichtung (104) aufweist, während diese Beschichtung sowohl der radial äußersten Fläche (106) als auch der oberen Fläche (102) fehlt,
wobei die thermisch gespritzte Beschichtung (104) radial einwärts der radial äußersten Fläche (106) endet, wodurch zwischen der thermisch gespritzten Beschichtung (104) und der radial äußersten Fläche (106) eine derartige unbeschichtete Zone (G) gebildet ist, dass ein Teil der unteren Fläche (102) neben der radial äußersten Fläche (106) unbeschichtet ist, wobei sich dieserTeil zu der radial äußersten Fläche (106) erstreckt.

2. Kolbenring nach Anspruch 1, wobei die äußerste Fläche (106) selektiv eine Oberflächenbeschichtung umfasst, die sich von der thermisch gespritzten Beschichtung (104), die der unteren Fläche (102) zugehörig ist, unterscheidet.

3. Kolbenring nach Anspruch 1, ferner umfassend einen radial äußersten unteren umfänglichen Rand (107), der dazu ausgebildet ist, Öl von einer zugehörigen Motorbohrungsoberfläche (204) zu schaben, wobei der radial äußerste untere umfängliche Rand (107) in der unbeschichteten Zone (G) angeordnet ist.

4. Kolbenring nach Anspruch 1, wobei sich ein Teil der thermisch gespritzten Beschichtung (104) selektiv entlang eines Teils der innersten Fläche (112) neben der unteren Fläche (102) geringfügig aufwärts erstreckt.

5. Kolbenring nach Anspruch 1, wobei der Kolbenring (100) ein geteilter Kolbenring ist, der zwei benachbarte freie Enden (170, 172) definiert.

6. Verfahren, umfassend:
Einsetzen eines Kolbenrings (100) in einen Halterungsaufbau (300), wobei der Halterungsaufbau (300) eine obere Fläche (314, 402, 452) und einen Einpass (304), der den Kolbenring (100) aufnimmt, umfasst;
Spritzen einer Beschichtung (104) zu dem Kolbenring (100), wobei die Beschichtung (104) von einem Außendurchmesser des Kolbenrings (100) zu einem Innendurchmesser des Kolbenrings (100) gerichtet ist;
Aufbringen des Spritzstrahls auf eine freiliegende Oberfläche des Kolbenrings (100), um die Beschichtung (104) zu bilden; selektives Kontaktieren der oberen Fläche (314, 402, 452) mit einem Teil des Spritzstrahls;
wobei das Spritzen der Beschichtung (104) das Richten des Spritzstrahls in einem Winkel (α) in Bezug auf eine Drehachse des Kolbenrings (100) umfasst;
wobei der Winkel (α) des Spritzstrahls mit der oberen Fläche (314, 402, 450) zusammenwirkt, um eine radiale Ausdehnung der unbeschichteten Zone (G) auf dem Kolbenring (100) zu definieren; und
dadurch Bilden einer unbeschichteten Zone (G) an der unteren Fläche (102) zwischen einem Abschlussende der Beschichtung (104) und einem äußersten Durchmesser (106) des Kolbenrings (100), wobei sich die unbeschichtete Zone (G) zu der radial äußersten Fläche (106) erstreckt.

7. Verfahren nach Anspruch 6, ferner umfassend das selektive Entfernen eines Lippenbereichs (312) des Einpasses (304), wobei der Lippenbereich (312) die obere Fläche (314) definiert.

8. Verfahren nach Anspruch 6, ferner umfassend das Aufbringen einer Oberflächenbeschichtung, die sich von der thermisch gespritzten Beschichtung (104) unterscheidet, auf die äußerste Fläche (106).

9. Verfahren nach Anspruch 6, ferner umfassend das Fixieren einer Maske (400, 450) an dem Einpass (304), wobei die Maske die obere Fläche (402, 452) definiert.

10. Verfahren nach Anspruch 6, ferner umfassend das Drehen des Einpasses (304) um eine Drehachse des Kolbenrings (100) während des selektiven Kontaktierens der oberen Fläche (312, 402, 452) mit dem Spritzstrahl.

11. Verfahren nach Anspruch 6, wobei die unbeschichtete Zone (G) so geschaffen wird, dass sie sich um einen gesamten Umfang des Kolbenrings (100) erstreckt.

12. Kolbenringaufbauhalterung (300), umfassend:
ein Element (312, 400, 450), das eine obere Fläche (314, 402, 452) und einen Einpass (304) definiert, wobei der Einpass (304) einen Außenumfang (308) und einen Innenumfang (310) aufweist, wobei sich der Außenumfang (308) von der oberen Fläche (314, 402, 452) abwärts erstreckt;
einen Kolbenring (100), der in dem Einpass (304) aufgenommen ist, wobei der Kolbenring (100)
eine sich radial erstreckende obere Fläche (110);
eine sich radial erstreckende untere Fläche (102);
eine radial innerste Fläche (112), die sich zwischen der oberen Fläche (110) und der unteren Fläche (102) erstreckt;
eine radial äußerste Fläche (106), die sich zwischen der oberen Fläche (110) und der unteren Fläche (102) erstreckt,
umfasst; und
einen Spritzbrenner (390), der dazu ausgebildet ist, einen thermischen Spritzstrahl von dem Außenumfang zu dem Innenumfang zu richten, wobei der Spitzstrahl auf die untere Fläche (102) des Kolbenrings (100) trifft, wobei sich der Außenumfang so über den Kolbenring erstreckt, dass der thermische Spritzstrahl durch die obere Fläche (314, 402, 452) wenigstens teilweise blockiert wird, wodurch an der unteren Fläche (102) eine Beschichtungsschicht (104) gebildet wird, die radial einwärts von der radial äußersten Fläche (106) des Kolbenrings (100) endet, wodurch zwischen der thermisch gespritzten Beschichtung (104) und der radial äußersten Fläche (106) eine unbeschichtete Zone (G) so gebildet wird, dass ein Teil der unteren Fläche (102) neben der radial äußersten Fläche (106) unbeschichtet ist, wobei sich der Teil zu der radial äußersten Fläche (106) erstreckt.

13. Halterung nach Anspruch 12, wobei der Einpass (304) einen Lippenbereich (312) umfasst, wobei der Lippenbereich (312) die obere Fläche (314) so definiert, dass der thermische Spritzstrahl durch den Lippenbereich (312) wenigstens teilweise blockiert wird, wobei der Lippenbereich (312) selektiv von dem Einpass (304) abnehmbar ist.

14. Halterung nach Anspruch 13, wobei der Lippenbereich (312) ein Trennmittel umfasst, das dazu ausgebildet ist, das Entfernen der thermisch gespritzten Beschichtung von dem Lippenbereich (312) zu erleichtern.

15. Halterung nach Anspruch 12, wobei das Element (312, 400, 450) selektiv um eine Drehachse des Kolbenrings (100) drehbar ist.

16. Halterung nach Anspruch 12, wobei der Spritzbrenner (390) dazu ausgebildet ist, den thermischen Spritzstrahl in einem Winkel (α) von dem Außenumfang zu dem Innenumfang zu richten, wobei der Winkel (α) mit der oberen Fläche (314, 402, 452) zusammenwirkt, um eine radiale Ausdehnung der unbeschichteten Zone (G) zu definieren.

## Revendications

1. Segment de piston (100) comprenant :
une surface supérieure s'étendant radialement (110);
une surface inférieure s'étendant radialement (102) ;
une surface radialement la plus interne (112) s'étendant entre ladite surface supérieure (110) et ladite surface inférieure (102) ;
une surface radialement la plus externe (106) s'étendant entre ladite surface supérieure (110) et ladite surface inférieure (102) ;
**caractérisé en ce que** ladite surface inférieure (102) comprend un revêtement pulvérisé thermiquement (104) et à la fois ladite surface radialement la plus externe (106) et ladite surface supérieure (102) ne présentent pas ledit revêtement,
dans lequel ledit revêtement thermiquement pulvérisé (104) se termine radialement à l'intérieur de ladite surface radialement la plus externe (106), formant de la sorte une zone non revêtue (G) entre ledit revêtement thermiquement pulvérisé (104) et ladite surface radialement la plus externe (106) de sorte qu'une partie de ladite surface inférieure (102) ne soit pas revêtue en un point adjacent à ladite surface radialement la plus externe (106), ladite partie s'étendant sur ladite surface radialement la plus externe (106).

2. Segment de piston selon la revendication 1, dans lequel ladite surface la plus externe (106) comprend sélectivement un revêtement de surface distinct dudit revêtement thermiquement pulvérisé (104) associé à ladite surface inférieure (102).

3. Segment de piston selon la revendication 1, comprenant en outre un bord circonférentiel inférieur radialement le plus externe (107) configuré pour recueillir l'huile d'une surface d'alésage de moteur associée (204), ledit bord circonférentiel inférieur radialement le plus externe (107) étant disposé dans ladite zone non revêtue (G).

4. Segment de piston selon la revendication 1, dans lequel une partie dudit revêtement thermique non pulvérisé (104) s'étend sélectivement légèrement vers le haut le long d'une partie de ladite surface la plus interne (112) adjacente à ladite surface inférieure (102).

5. Segment de piston selon la revendication 1, dans lequel ledit segment de piston (100) est un segment de piston fendu définissant deux extrémités libres adjacentes (170, 172).

6. Procédé comprenant les étapes consistant à :
insérer un segment de piston (100) dans un ensemble d'assemblage (300), ledit ensemble d'assemblage (300) comprenant une surface supérieure (314, 402, 452) et un contre-alésage (304) recevant ledit segment de piston (100) ;
pulvériser un revêtement (104) vers ledit segment de piston (100), ledit revêtement (104) étant dirigé d'un diamètre extérieur dudit segment de piston vers un diamètre intérieur dudit segment (100) ;
appliquer le jet pulvérisé à une surface exposée dudit segment de piston (100) pour former ledit revêtement (104) ;
mettre en contact sélectivement ladite surface supérieure (314, 402, 452) avec une partie du jet pulvérisé ;
dans lequel le jet pulvérisé dudit revêtement (104) comprend la direction du jet pulvérisé sous un angle (α) par rapport à l'axe de rotation dudit segment de piston (100) ;
dans lequel ledit angle (α) du jet pulvérisé coopère avec ladite surface supérieure (314, 402, 450) pour définir une extension radiale de ladite zone non revêtue (G) sur ledit segment de piston (100) ; et
former de la sorte une zone non revêtue (G) sur ladite surface inférieure (102) entre une extrémité finale dudit revêtement (104) et un diamètre le plus externe (106) dudit segment de piston (100), ladite zone non revêtue (G) s'étendant vers la surface radialement la plus externe (106).

7. Procédé selon la revendication 6, comprenant en outre le retrait sélectif d'une partie de lèvre (312) dudit contre-alésage (304), ladite partie de lèvre (312) définissant ladite surface supérieure (314).

8. Procédé selon la revendication 6, comprenant en outre l'application d'un revêtement de surface distinct dudit revêtement thermiquement pulvérisé (104) à ladite surface la plus externe (106).

9. Procédé selon la revendication 6, comprenant en outre la fixation d'un masque (400, 450) audit contre-alésage (304), ledit masque définissant ladite surface supérieure (402, 452).

10. Procédé selon la revendication 6, comprenant en outre la rotation dudit contre-alésage (304) autour d'un axe de rotation dudit segment de piston (100) au cours de ladite mise en contact sélective de ladite surface supérieure (312, 402, 452) avec le jet pulvérisé.

11. Procédé selon la revendication 6, établissent ladite zone non revêtue (G) comme s'étendant autour d'une circonférence entière dudit segment de piston (100).

12. Système d'assemblage de segment de piston (300) comprenant :
un élément (312, 400, 450) définissant une surface supérieure (314, 402, 452) et un contre-alésage (304), ledit contre-alésage (304) ayant une périphérie externe (308) et une périphérie interne (310), ladite périphérie externe (308) s'étendant vers le bas de ladite surface supérieure (314, 402, 452) ;
un segment de piston (100) reçu dans ledit contre-alésage (304), ledit segment de piston (100) comprenant :
une surface supérieure s'étendant radialement (110) ;
une surface inférieure s'étendant radialement (102) ;
une surface radialement la plus interne (112) s'étendant entre ladite surface supérieure (110) et ladite surface inférieure (102) ;
une surface radialement la plus externe (106) s'étendant entre ladite surface supérieure (110) et ladite surface inférieure (102) ; et
une torche de pulvérisation (390) configurée pour diriger un jet de pulvérisation thermique de ladite périphérie externe vers ladite périphérie interne, le jet pulvérisé frappant ladite surface inférieure (102) dudit segment de piston (100), ladite périphérie externe s'étendant au-dessus dudit segment de piston de sorte que le jet de pulvérisation thermique soit au moins partiellement bloqué par ladite surface supérieure (314, 402, 452), formant de la sorte une couche de revêtement (104) sur ladite surface inférieure (102) qui se termine radialement vers l'intérieur de ladite surface radialement la plus externe (106) dudit segment de piston (100), formant de la sorte un zone non revêtue (G) entre ledit revêtement thermiquement pulvérisé (104) et ladite surface radialement la plus externe (106) de sorte qu'une partie de ladite surface inférieure (102) ne soit pas revêtue au voisinage de ladite surface radialement la plus externe (106), ladite partie s'étendant vers ladite surface radialement la plus externe (106).

13. Système selon la revendication 12, dans lequel ledit contre-alésage (304) comprend une partie de lèvre (312), ladite partie de lèvre (312) définissant ladite surface supérieure (314) de sorte que le jet thermiquement pulvérisé soit au moins en partie bloqué par ladite partie de lèvre (312), ladite partie de lèvre (312) pouvant être sélectivement retirée dudit contre-alésage (304).

14. Système selon la revendication 13, dans lequel ladite partie de lèvre (312) comprend un agent de libération configuré pour faciliter le retrait dudit revêtement thermiquement pulvérisé de ladite partie de lèvre (312).

15. Système selon la revendication 12, dans lequel ledit élément (312, 400, 450) peut tourner sélectivement autour d'un axe de rotation dudit segment de piston (100).

16. Système selon la revendication 12, dans lequel ladite torche de pulvérisation (390) est configurée pour diriger le jet thermiquement pulvérisé sous un angle (α) de ladite périphérie externe vers ladite périphérie interne, ledit angle (α) coopérant avec ladite surface supérieure (314, 402, 452) pour définir une extension radiale de ladite zone non revêtue (G).
